# EUROPEAN PATENT APPLICATION

(11) **EP 3 009 962 A1**
(43) Date of publication of application: **20.04.2016**
(21) Application number: 15189658.6
(22) Date of filing: 13.10.2015
(51) Int. Cl.: G06K 13/08, G07F 19/00, G07F 7/08

(54) **SAFETY DEVICE FOR A PORT OF ENTRY OF AN AUTOMATIC MACHINE**

(30) Priority: 13.10.2014 IT TO20140821
(71) Applicant: Corim S.r.l., 10014 Caluso (IT)
(72) Inventor: GIACCAGLIA, Michele, 10014 CALUSO (IT)
(74) Representative: Boggio, Luigi

(57) **Abstract**

A port (3) of entry of a magnetic card (4) of an automatic machine (1) is preceded by a safety device (5), of which a fixed attachment frame (7) delimits a slot (12) for the transit of the magnetic card (4) from and to the port of entry (3); inside the slot (12) and in correspondence with a transit area of the magnetic strip (6) of the card (4) there is obtained a calibrated passageway (16) approximating upwards the thickness of the card (4) and delimited by a rolling body (18) housed in said slot (12).

## Description

The present invention relates to a safety device for a port of entry of an automatic machine

As is known, automatic machines are provided with a port for the insertion of a card with a magnetic strip, by means of which it is possible to exchange data with the system that manages the automatic machine and perform a variety of transactions, including cash withdrawals.

The port of insertion communicates with the outside via a projecting shaped entry body generally cantilevered and provided with a slot for the transit of the card from and to the port of insertion.

As is also known, thefts of money are a frequent occurrence, with cash withdrawals being made using cloned cards after reading the identification codes of magnetic cards of unsuspecting card holders when said magnetic cards are inserted into or removed from the automatic machine. One of the methods used to obtain said codes consists of using a sophisticated electronic device for reading and the remote transmission of the codes detected.

The latest generation electronic devices are extremely thin, usually as thin as or only slightly thicker than the actual card. Such devices can thus easily be inserted into the slot and fitted to one of the walls delimiting said slot in a position so as to face the magnetic strip of the card when this passes through said slot.

Such devices are not visible from the outside and, once inserted, continue to work undetected until their power source is depleted.

Of the known solutions for preventing the use of such devices inside the slots, some have proved ineffective and others can easily be removed.

The purpose of the present invention is to provide a safety device, which overcomes the problem described above in a simple and cost-effective manner and, in particular, is able to prevent the use of extremely thin devices for reading and transmitting data, such as the latest generation devices.

According to the present invention there is provided a safety device for a port of entry of an automatic machine, as claimed in claim 1.

The present invention will now be described with reference to the accompanying drawings, illustrating a nonlimiting embodiment thereof, in which:
figure 1 is a perspective view of a preferred embodiment of the safety device according to the present invention coupled to an automatic machine illustrated in part;
figure 2 is a cross-sectional view of the safety device of figure 1;
figure 3 is a cross-sectional view on a greatly enlarged scale of a detail of figure 2; and
figure 4 is a view along the line IV-IV of figure 2.

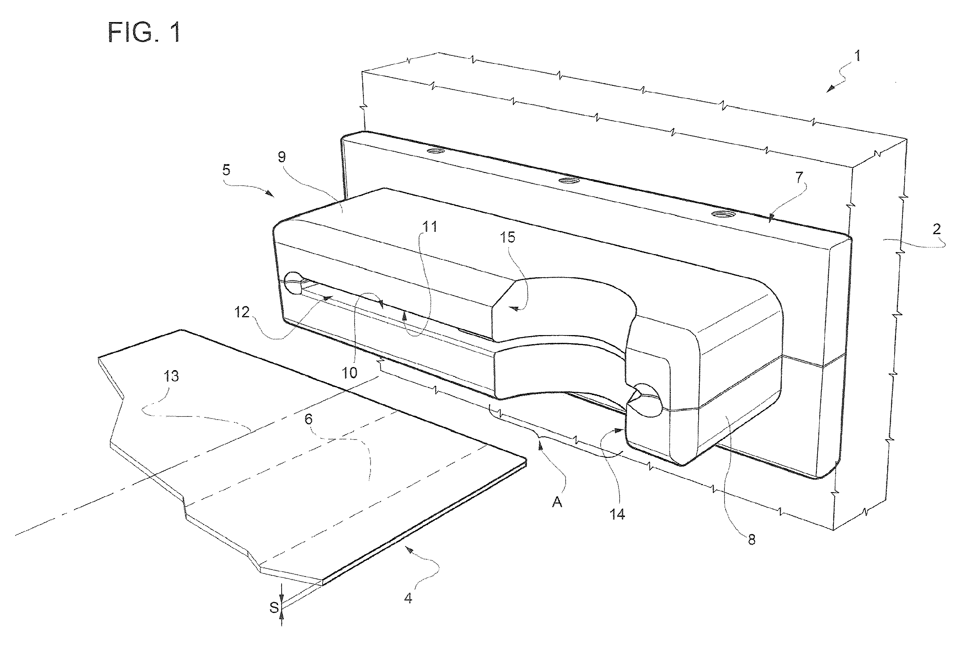

In figure 1, denoted as a whole by reference numeral 1 is an automatic machine, of a type known in the prior art and not described in detail, which comprises a fixed structure 2 and a port 3 of entry for a magnetic card 4, also of a known type, and provided with a magnetic strip 6.

Again with reference to figure 1, the port 3 of entry is preceded by a safety device 5 to prevent attempts to misappropriate the identification codes or clone the magnetic card 4 from outside the port of entry 3 and the subsequent theft of cash.

The device 5 comprises an attachment body 7 coupled in a known way to the fixed structure 2 and, in turn, comprising a bottom wall 8 and a top wall 9 which are horizontal and facing one another and are parallel and transversely spaced with respect to one another. The walls 8 and 9 are separate and permanently joined to one another in a known way and delimit a flat, horizontal slot 12, which, in use, permits the transit of the magnetic card 4 from and towards the port of entry 3 of the automatic machine 1 in a direction 13 of insertion/removal.

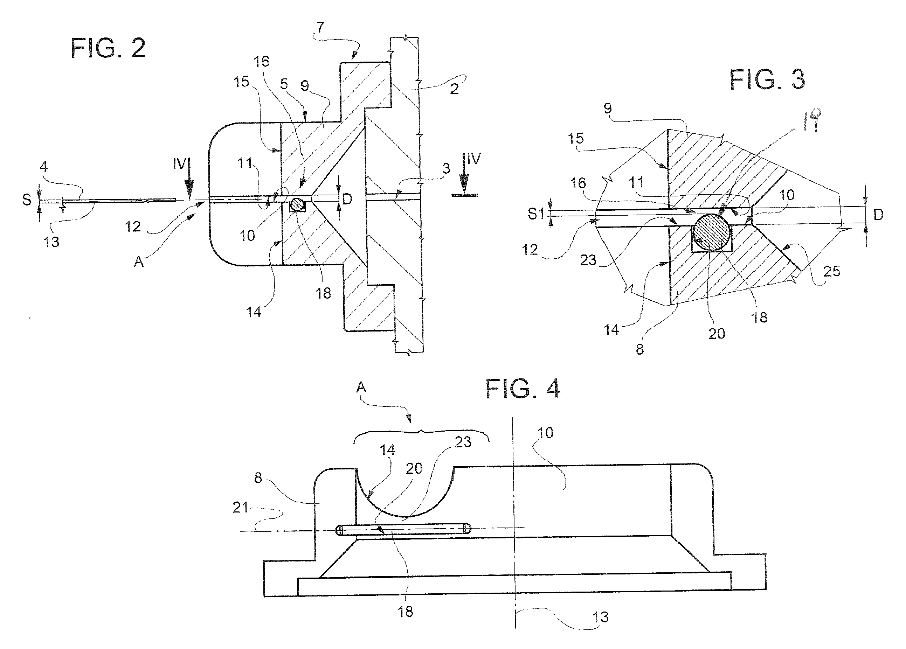

In correspondence with an area A of the slot 12 for the transmit of the magnetic strip 6 (figure 1), the walls 8 and 9 are provided with respective front recesses 14 and 15, extending from respective free front end edges of said walls 8 and 9 and are delimited internally by respective flat surfaces 10 and 11 parallel to one another and transversely spaced with respect to one another. The surfaces 10 and 11 define part of the slot 12 and are arranged at a distance D (figs. 2 and 3) greater than the thickness S of the magnetic card 4 and, conveniently variable between 4 and 6 millimetres.

With reference to figure 2, the device 1 further comprises a calibrated passageway 16 obtained in the area A of the slot 12 and downstream of the front recesses 14 and 15 in the direction of insertion of the magnetic card 4.

In the specific example described here, the calibrated passageway 16 is delimited, on one side, by the wall 11 and, on the other, by an external lateral surface 19 of a cylindrical body 18 protruding beyond the surface 10 and, conveniently, orthogonal to the direction 13 of insertion/removal and, preferably, parallel to the surfaces 10 and 11. With reference to figure 3, the distance S1 between the surface 11 and the lateral surface 19 of the cylindrical body 18 is much smaller than the distance D and approximating upwards the thickness S of the card 4. Preferably, the distance S1 is variable between 0.7 and 1.3 millimetres according to the type of card 4 and, conveniently, 0.9 millimetres.

Again with reference to the specific example described here, the cylindrical body 18 is partially housed in a blind seat 20 obtained in the wall 8 and having an entrance made in the surface 10 and, thus, facing the surface 11. The seat 20 is elongated in a direction 21 orthogonal to the direction 13 of insertion/removal. The seat 20 is arranged downstream of a portion 23 (figures 3 and 4) of the surface 10 in a direction of insertion of said card 4; conveniently, the portion 23 delimits the seat 20, on one side, and the recess 14, on the other. The seat 20 is then arranged immediately upstream, again in the direction of insertion of the card 4, of an internal slide 25.

Again in the specific example described here, the cylindrical body 18 is a solid body that is able to rotate within the seat 20. Conveniently, the cylindrical body 18 is arranged so as to rest on a bottom wall of the seat 20. In this way, the distance S1 is kept strictly fixed and at a constant and predefined value as a function of the thickness of the card. Alternatively, according to an alternative embodiment that is not illustrated, the body 18 is hinged to the wall 8 by means of pivot pins so as to rotate about a fixed hinge axis orthogonal to the direction 13. Again with reference to figure 3, the body 18, owing to the fact that the outside dimensions approximate by defect the inside dimensions of the seat 20, rotates idly in said seat 20 always about an axis that is practically fixed when pushed by the magnetic card.

In use, the cylindrical body 18 creates, on one side, a localised obstruction inside the slot 12 and which permits the transit of the magnetic card 4 only and prevents the transit of said magnetic card 4 if an electronic device for unlawfully reading and transmitting data is inserted at least partially through the calibrated passageway 16.

Furthermore, the presence of the cylindrical body 18 creates a discontinuity on the surface 10 and, in particular, implements a mobile surface on the surface 10, which is a fixed surface, and this prevents the permanent fixing of said electronic device for unlawfully reading and transmitting data to the wall 8.

The arrangement of the seat 20 in a position that is further forward than the recess 14 in the direction of insertion of the magnetic card 4 also means the cylindrical body 18 cannot be accessed from the outside and thus removed or extracted from the seat 20.

Moreover, the cylindrical body 18 is practically invisible from the outside, which further complicates the insertion of the aforesaid electronic devices.

Because the seat 20 and thus the cylindrical body 18 are immediately upstream of the slide 25, between the seat 20 and said slide 25 there is practically no useful surface on which to place the electronic device for unlawfully reading and transmitting data on the card 4; thus, even if such electronic device for reading and transmitting data were inserted through the calibrated passage 16, it would not be able to stay on the surface 10 but would fall down the slide 25 away from the magnetic strip 6.

The use of an idle rolling body to delimit the calibrated passageway 16 facilitates the advancement of the magnetic card 4 within the slot 12 in that the sliding friction components are reduced and there is no sticking of the card when it is inserted through the calibrated passageway 16.

From the above it is apparent that modifications and variations may be made to the device 1 described herein without departing from the scope of the independent claim. In particular, the dimensions and/or geometry of the cylindrical body 18 may differ from those illustrated by way of example or said cylindrical body 18 could be replaced with several separate rolling cylindrical bodies or by one or more different rolling bodies, which could, for instance, be spherical, rounded or have external grooving.

Lastly, instead of being inserted in a seat or in a single seat, the cylindrical body 18 or the rolling bodies defined above could be coupled to the wall 8 in a different way, so as to rotate about one or more hinge axes.

To conclude, the surfaces 10 and 11 and thus the slot 12 might not be horizontal but, for example, vertical.

## Claims

1. A safety device for a port of entry of an automatic machine, the device comprising an attachment frame for attaching to a fixed structure of the automatic machine; the attachment frame comprising a first and a second wall facing each other and delimiting a slot for the transit of the magnetic card from and to a port of entry of the automatic machine in an insertion/removal direction; said walls being delimited in an area of said transit slot for the magnetic strip, by a first and by a second surface, respectively, which face each other, the first surface facing, in use, said magnetic strip, **characterized in that** it comprises, between said first and second surface, a calibrated passageway having a fixed size that is smaller than the corresponding distance between said first and second surface and approximating upwards the thickness of said magnetic card.

2. A device according to claim 1, **characterized in that** said calibrated passageway is delimited by a projection which protrudes from one of said first or second surface.

3. A device according to claim 1, **characterized in that** said calibrated passageway protrudes from said first surface towards the second surface.

4. A device according to claim 2, **characterized in that** said projection is mobile.

5. A device according to claim 4, **characterized in that** said projection is defined by at least one rolling body.

6. A device according to claim 5, **characterized in that** said rolling body rotates idly about a fixed hinge axis when pushed by said magnetic card.

7. A device according to any one of the claims from 4 to 6, **characterized in that** the first wall comprises a blind cavity having an entry made on the first surface and facing the second surface; said mobile projection being housed in said blind cavity and delimiting with said second surface said calibrated passageway having a fixed size.

8. A device according to claim 7, **characterized in that** said blind cavity is elongated in a direction transversal to said insertion/removal direction.

9. A device according to claim 7 or 8, **characterized in that** said blind cavity extends downstream of a portion of said first surface in an insertion direction of said card.

10. A device according to claim 5, **characterized in that** said rolling body is a cylindrical body which is orthogonal to said insertion/removal direction of said card.

11. A device according to claim 6, **characterized in that** said rolling body is resting on a bottom wall of said blind cavity.

12. A device according to any one of the preceding claims, **characterized in that** said dimension of the calibrated passageway has a variable width of between 0.7 and 1.3 millimetres.

13. A device according to any one of the preceding claims, **characterized in that** said dimension of the calibrated passageway has a width of 0.9 millimetres.
